(19) Europäisches Patentamt
European Patent Office
Office européen des brevets

(11) **EP 3 715 625 B1**

(12) **EUROPÄISCHE PATENTSCHRIFT**

(45) Veröffentlichungstag und Bekanntmachung des Hinweises auf die Patenterteilung:
**09.11.2022 Patentblatt 2022/45**

(21) Anmeldenummer: **19165511.7**

(22) Anmeldetag: **27.03.2019**

(51) Internationale Patentklassifikation (IPC):
**F03D 7/02** (2006.01)    **F03D 7/04** (2006.01)

(52) Gemeinsame Patentklassifikation (CPC):
**F03D 7/0224; F03D 7/028; F03D 7/0296; F03D 7/045;** F05B 2270/1095; Y02E 10/72

(54) **VERFAHREN ZUR STEUERUNG EINER WINDENERGIEANLAGE BEI EINER ÄNDERUNG DES LEISTUNGSSOLLWERTS**

METHOD FOR CONTROLLING A WIND TURBINE DURING A CHANGE OF THE POWER OUTPUT SETPOINT

PROCÉDÉ DE COMMANDE D'UNE ÉOLIENNE LORS D'UN CHANGEMENT DE LA VALEUR DE CONSIGNE DE PUISSANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.09.2020 Patentblatt 2020/40**

(73) Patentinhaber: **Nordex Energy SE & Co. KG 22419 Hamburg (DE)**

(72) Erfinder:
• **Drossel, Detlef 22851 Norderstedt (DE)**
• **Fleischmann, Oliver 22335 Hamburg (DE)**

(74) Vertreter: **Hauck Patentanwaltspartnerschaft mbB Postfach 11 31 53 20431 Hamburg (DE)**

(56) Entgegenhaltungen:
WO-A1-2017/190744    WO-A2-2010/084131
DE-A1-102016 212 362

**Beschreibung**

Die vorliegende Erfindung betrifft ein Verfahren zur Steuerung einer Windenergieanlage bei einer Änderung des Leistungssollwerts. Eine Änderung des Leistungssollwerts kann aus verschiedenen Gründen auftreten, so kann die Änderung des Leistungssollwerts extern vorgegeben sein oder sich aus dem Betrieb der Windenergieanlage selbst ergeben. Betrachtet werden solche Änderungen der Leistungssollwerte, bei denen innerhalb eines vorbestimmten Zeitintervalls ein geänderter Leistungssollwert erreicht werden soll.

Ein einfacher Ansatz, um eine Änderung in der Leistung der Windenergieanlage umzusetzen, besteht darin, einen neuen Leistungssollwert mit einer Rampe, die eine konstante Steigung oder ein konstantes Gefälle aufweist, innerhalb des vorbestimmten Zeitintervalls durch die Änderung eines oder mehrerer Betriebsparameter anzufahren. Hierbei sind zwei verschiedene Fälle zu unterscheiden: In einem ersten Fall erfolgt eine Regelung des Leistungsistwertes über den oder die Betriebsparameter in der Art, dass der Leistungsistwert in linearer Form entlang einer Rampe auf den neuen Leistungssollwert geregelt wird. Dies entspricht einer rampenförmigen Regelung des Leistungsistwerts. Alternativ ist es auch möglich, den oder die Betriebsparameter zu bestimmen, die dem neuen Leistungssollwert entsprechen. Zur Erreichung des neuen Leistungssollwerts können dann die aktuellen Betriebsparameter beispielsweise linear, innerhalb des vorbestimmten Zeitintervalls, auf die neuen Werte der Betriebsparameter für den geänderten Leistungssollwert geführt werden. Diese Veränderung der Betriebsparameter führt nicht unbedingt zu einer linearen Änderung des Leistungssollwerts, da die Zusammenhänge zwischen den Betriebsparametern und dem Leistungssollwert auch nichtlinear sein können.

Aus WO 2016/198077 A1 ist für eine Windenergieanlage ein Steuersystem bekannt, das einen Rampenänderungsbegrenzer aufweist, der die Änderungsrate abhängig von der Leistungsdifferenz zwischen dem Leistungssollwert und einer geschätzten verfügbaren Windleistung begrenzt.

Aus WO 2017/190744 A1 ist eine Steuerung für eine Windenergieanlage bekannt geworden, die bei einem Netzfehler mit niedriger Spannung eine prädikative Steuerung verwendet.

Aus EP 3 165 765 A1 ist ein Verfahren und ein Steuerungssystem zum Steuern eines Anstellwinkels eines Rotorblatts bekannt geworden, bei dem während eines Abbremsvorgangs eine zeitabhängige Solldrehzahl als Führungsgröße eines Drehzahlreglers der Windenergieanlage vorgegeben wird, wobei die Drehzahl des Rotors einer Windenergieanlage von einem Drehzahlregler geregelt wird, der zum Regeln der Drehzahl den Anstellwinkel des Rotorblatts verändert.

Aus WO 2015/078478 A1 ist ein Steuerverfahren bekannt geworden, bei dem über eine Vorwärtssteuerung ein Sollwert für einen Blatteinstellwinkel bestimmt wird.

Aus WO 2016/138906 A1 ist ein Verfahren für eine Windenergieanlage bekannt geworden, bei dem für einen Niedrigenergiemodus die Steuerbarkeit der Windenergieanlage aufrechterhalten wird.

WO 2016/198076 A1 beschreibt ein Steuersystem für eine Windenergieanlage, bei dem die Änderung des Blatteinstellwinkels entsprechend einer angeforderten Leistung vorgenommen wird.

Aus EP 2 224 129 B1 ist ein Steuerverfahren für eine Windenergieanlage bekannt geworden, mit dem Schwingungen gedämpft werden können. Hierfür wird, ausgehend von einem anfänglichen Drehmoment, eine maximale Änderung des Drehmoments bestimmt.

Aus EP 3 156 646 B1 ist eine Windenergieanlage bekannt geworden, die über eine Vorsteuerung mit einer inversen Regelstrecke verfügt. Die inverse Regelstrecke bestimmt ein Leistungsdrehmoment aus dem Drehzahlsollwert und dem Leistungssollwert sowie ein Beschleunigungsdrehmoment aus der zeitlichen Änderung des Drehzahlsollwerts.

Aus DE 10 2016 212 362 A1 ist eine Lidar-basierte, multivariable Feedforwardregelung bekannt. Hierbei wird ein flachheitsbasierter Feedforwardregler eingesetzt, um ausgehend von der Windgeschwindigkeitsvorschau und unter Berücksichtigung von Systembeschränkungen mit Hilfe eines inversen Windturbinenmodells Trajektorien der Rotorblattdrehzahl und Turmbewegung während des Betriebes zu entwerfen.

Der Erfindung liegt die Aufgabe zugrunde, für eine Windenergieanlage ein Verfahren bereitzustellen, das bei einer Änderung eines Leistungssollwerts für die Windenergieanlage, die Änderung mit einfachen Mitteln zuverlässig umsetzt.

Erfindungsgemäß wird die Aufgabe durch ein Verfahren mit den Merkmalen aus Anspruch 1 gelöst. Vorteilhafte Ausgestaltungen bilden die Gegenstände der Unteransprüche.

Das erfindungsgemäße Verfahren ist vorgesehen und bestimmt zur Steuerung einer Windenergieanlage bei einer Änderung eines Leistungssollwerts für die von der Windenergieanlage einzuspeisende Leistung, wobei die Änderung des Leistungssollwerts innerhalb eines vorbestimmten Zeitintervalls zu erfolgen hat. Die Dauer des Zeitintervalls kann beispielsweise extern durch ein Energieversorgungsunternehmen vorgegeben sein oder frei gewählt werden. Die Windenergieanlage weist einen Turm mit einem Rotor auf, an dem mindestens ein Rotorblatt zum Antrieb des Rotors vorgesehen ist. Ansprechend auf die für das vorbestimmte Zeitintervall vorgesehene Änderung des Leistungssollwerts werden ein oder mehrere für die von der Windenergieanlage einzuspeisende Leistung bestimmende Betriebsparameter angesteuert. Eine Funktion zur Ansteuerung des Betriebsparameters oder der Betriebsparameter wird aus der Schubkraft des Rotors berechnet. Die Funktion zur Ansteuerung des Betriebsparameters oder der Betriebsparameter gibt in geeigneter Form den zeitlichen Verlauf des oder der Betriebsparameter zur Erreichung des geänderten Leistungssollwerts in dem vorbestimmten Zeitintervall an. Der geänderte Leistungssollwert kann hierbei eine Erhöhung oder eine Verminderung des Leistungssollwerts darstellen. Die Funktion zur Ansteuerung beschreibt, wie mithilfe des Betriebsparameters oder der Betriebsparameter der geänderte Leistungssollwert durch die Windenergieanlage erreicht werden kann. Bei dem erfindungsgemäßen Verfahren erfolgt zunächst eine Ermittlung einer Schubkraft des Rotors auf die Masse der Windenergieanlage mit Turm und Gondel. Die angreifende Schubkraft wirkt hierbei durch die aus dem Wind aufgenommene Kraft auf die schwingungsfähige Masse der Windenergieanlage, die auch kurz als Turmkopf bezeichnet wird. Aus der ermittelten Schubkraft des Rotors auf den Turmkopf der Windenergieanlage wird für den oder die anzusteuernden Betriebsparameter die Funktion zu deren Ansteuerung ermittelt. Bei der Bestimmung der Schubkraft kann, von den aktuellen Betriebsbedingungen der Windenergieanlage ausgehend, die wirkende Schubkraft des Rotors entsprechend dargestellt werden. Von den möglichen Funktionen wird eine technisch mögliche Funktion ausgewählt, die zu einer an der Windenergieanlage mit den Betriebsparametern darstellbaren Schubkraft des Rotors führt. In einem weiteren Schritt des erfindungsgemäßen Verfahrens wird dann für den Verlauf der Schubkraft die Funktion für die Ansteuerung des Betriebsparameters oder der Betriebsparameter bestimmt. Der Bewegungsverlauf des Turms der Windenergieanlage wird als ein Schwingungsverlauf angesehen, wobei dieser nicht als eine periodische oder eine harmonische Schwingung verlaufen muss. Vielmehr kann der Schwingungsverlauf auch einer Bewegung des Turms in eine neue Position entsprechen, die sich aus der Schubkraft des Rotors für den geänderten Leistungssollwert ergibt.

Durch eine parametrierte Zeitfunktion der Turmauslenkung wird der zeitliche Bewegungsverlauf des Turms bzw. des Turmkopfs derart vorgegeben, dass eine geringe Belastung für den Turm der Windenergieanlage auftritt. Kerngedanke des erfindungsgemäßen Verfahrens ist es, diejenige Änderung der Betriebsparameter auf Basis der parametrierten Zeitfunktion der Turmauslenkung festzulegen, für die eine geringe Belastung für die Windenergieanlage erfolgt. Kern der Überlegung hierbei ist, dass aufgrund eines nichtlinearen Verhaltens an einem schwingungsfähigen System, wie dem Turm einer Windenergieanlage, die Änderung des Betriebsparameters oder der Betriebsparameter unterschiedliche Wirkungen haben und über die vorgegebene parametrierte Zeitfunktion der Turmauslenkung an das nichtlineare System angepasst werden kann. Die parametrierte Zeitfunktion der Turmauslenkung wird über eine Reihe von Randbedingungen festgelegt. Die Randbedingungen umfassen beispielsweise die Werte der parametrierten Zeitfunktion der Turmauslenkung zu einem Anfangs- und Endzeitpunkt oder die Geschwindigkeit der Turmauslenkung zu diesem Zeitpunkt.

In einer bevorzugten Ausgestaltung des erfindungsgemäßen Verfahrens bildet ein Blatteinstellwinkel mindestens eines Rotorblatts der Windenergieanlage den anzusteuernden Betriebsparameter. Eine Steuerung des Leistungssollwerts für eine Windenergieanlage über eine Änderung des Blatteinstellwinkels ist hinlänglich bekannt. Mit einer Änderung des Blatteinstellwinkels ändert sich die aus dem Wind aufgenommene Leistung ebenso wie die auf das Rotorblatt und damit auch auf den Turm der Windenergieanlage wirkende Schubkraft des Rotors. Insofern besteht ein eindeutiger Zusammenhang zwischen dem Blatteinstellwinkel und der Schubkraft des Rotors, der genutzt werden kann, um die für die parametrierte Zeitfunktion der Turmauslenkung ermittelte Schubkraft des Rotors in die Ansteuerung der Betriebsparameter umzusetzen.

In einer bevorzugten Weiterführung des erfindungsgemäßen Verfahrens beschreibt die parametrierte Zeitfunktion der Turmauslenkung eine oder mehrere turmspezifische Konstanten, wie beispielsweise die erste Eigenfrequenz, die Dämpfungskonstante der Turmschwingung und/oder auch geometrische Turmabmessungen. In der Regel gibt das vorbestimmte Zeitintervall, in dem die Änderung des Leistungssollwerts umzusetzen ist vor, wie schnell bzw. wie langsam der Leistungssollwert geändert werden soll. Dementsprechend ist auch die parametrierte Funktion eine Zeitfunktion, wobei diese sich auch über einen längeren oder kürzeren Zeitraum als das vorbestimmte Zeitintervall erstrecken kann.

In einer bevorzugten Ausgestaltung erfüllt die parametrierte Zeitfunktion der Turmauslenkung Randbedingungen, die die Turmbewegung kennzeichnen. Bei der Bestimmung der gewünschten Zeitfunktion werden die Parameter durch die Randbedingungen festgelegt, so dass die parametrierte Zeitfunktion durch Anwendung der Randbedingungen einen eindeutigen Bewegungsverlauf für den Turm beschreibt. Die Anzahl der möglichen Randbedingungen hängt von der Anzahl der Parameter in der parametrierten Zeitfunktion für die Turmauslenkung und von dem Zusammenhang zwischen Schubkraft und Turmauslenkung ab. Wird als Zusammenhang eine Differentialgleichung zweiter Ordnung angenommen, so sind bereits zwei Randbedingungen für eine eindeutige Lösung der Differentialgleichung notwendig.

Eine mögliche Klasse von parametrierten Zeitfunktionen besteht beispielsweise aus zusammengesetzten Funktionen, die einen linear ansteigenden Teil und einen oszillatorischen Teil besitzen. Beide Teile sind selbst parametriert und können zudem geeignet gegeneinander gewichtet zusammengesetzt werden, um eine nach Möglichkeit minimale Belastung für den Turm sicherzustellen.

In einer bevorzugten Weiterführung des erfindungsgemäßen Verfahrens beschreibt die parametrierte Zeitfunktion eine oder mehrere turmspezifische Konstanten, wie beispielsweise die erste Eigenfrequenz, die Dämpfungskonstante der Turmschwingung und/oder auch geometrische Turmabmessungen. Als Randbedingung hat sich als besonders vorteilhaft herausgestellt, die maximale Auslenkung des Turms zu begrenzen und diesen bevorzugt nur bis zu seiner Endlage schwingen zu lassen. Wie bereits erwähnt, bedeutet der Ausdruck "Turmschwingung" hier nicht notwendigerweise, dass eine periodische oder gar eine harmonische Schwingung vorliegt. Von einer Turmschwingung wird bereits gesprochen, wenn der Turm der Windenergieanlage seine Position mit der Zeit verändert. Die maximale Auslenkung ist ein mögliches Maß für die Belastung des Turms durch die Leistungsänderung.

Ein turmspezifische Konstante, die eine besondere Bedeutung bei der Klasse der parametrierten Zeitfunktionen spielt, ist die erste Turmeigenfrequenz. Mit der ersten Turmeigenfrequenz geht ein Parameter, der das Schwingungsverhalten des Turms beschreibt, direkt in die Betrachtung ein und wirkt sich auch auf den zeitlichen Verlauf bei der Ansteuerung der Betriebsparameter aus. Zusätzlich kann auch die Turmdämpfung mit in die parametrierten Zeitfunktionen einbezogen werden.

Das erfindungsgemäße Verfahren wird nachfolgend näher beschrieben. Hierbei zeigen:

Figur 1    die zeitliche Entwicklung der Turmauslenkung bei verschieden anliegenden Kraftverläufen, und

Figur 2    ein weiteres Beispiel für die Turmauslenkung über der Zeit bei einem nichtlinearen Kraftverlauf.

Kerngedanke des erfindungsgemäßen Verfahrens ist es, die parametrierte Zeitfunktion L(t) zu definieren, die eine Änderung der Betriebsparameter festlegt. Für die Änderung der Betriebsparameter wird die mit der Zeit auf den Turm der Windenergieanlage wirkende Schubkraft berechnet. Aus dem zeitlichen Kraftverlauf und in Kenntnis der Schwingungsgleichung für den Turm der Windenergieanlage kann dann die Turmschwingung mit Hilfe von Anfangsbedingungen bestimmt werden. Der Schwingungsverlauf des Turms legt dabei fest, wie stark der Turm mechanisch belastet wird.

Grundsätzlich sind solche Probleme auf unterschiedliche Art und Weise mathematisch formulierbar. Für ein gutes Verständnis wird hier auf die Differenzialgleichung zur Turmauslenkung abgestellt. Es handelt sich um die Differenzialgleichung zweiter Ordnung für eine gedämpfte harmonische Schwingung mit einer aufgeprägten Anregung. Es sei L(t) eine Zeitfunktion, die die Turmauslenkung beschreibt, ferner sei F(t) eine Zeitfunktion, die die Kraft auf den Turmkopf beschreibt. Ausgehend von definierten Anfangsbedingungen für t = 0, wie beispielsweise L(0) = L̇(0) = 0 kann das Verhalten der Turmschwingung in der Zeit durch folgende Differenzialgleichungen beschrieben werden:

$$L + \frac{2D}{\omega_T}\dot{L} + \frac{\ddot{L}}{\omega_T^2} = F.$$

Zur Vereinfachung ist hier eine Turmfederkonstante zu Eins gesetzt worden, sodass die Schwingung von der Turmeigenfrequenz $\omega_T$ und der Dämpfung D der Turmschwingung bestimmt wird.

Die Nebenbedingungen geben hierbei an, dass der Turm sich zu Beginn der Betrachtung (t = 0) in Ruhe befindet und keine Anfangsgeschwindigkeit besitzt. Selbstverständlich könnte auch eine Ausgangslage gewählt werden, die der aktuellen Turmposition und Geschwindigkeit entspricht. Die Zeitfunktion L(t), die die Turmauslenkung beschreibt wird, in die Differenzialgleichung eingesetzt und gibt damit die Kraftfunktion F(t) an.

Um den Zusammenhang zwischen der Turmauslenkung in der Zeit- und Kraftfunktion zu verdeutlichen, sei dies mit einer Lösung der Differenzialgleichung vorgeführt. Es sei für die Turmauslenkung die folgende parametrierte Zeitfunktion als vorteilhaft angenommen:

$$L = \frac{L_E}{T_E}t - b * \sin(\frac{2\pi}{T_E}t),$$

wobei $L_E$ hier die Endlage der Turmauslenkung zum Zeitpunkt t = $T_E$ bezeichnet. $T_E$ beschreibt hier die Dauer des vorbestimmten Zeitintervalls, in dem die Änderung des Leistungssollwerts erfolgen soll; b ist ein Parameter, der den oszillatorischen Teil der Zeitfunktion gewichtet. Die erste Ableitung der Zeitfunktion L(t) lautet:

$$\dot{L} = \frac{L_E}{T_E} - b * \frac{2\pi}{T_E}\cos(\frac{2\pi}{T_E}t).$$

Die zweite Ableitung der Zeitfunktion L(t) lautet:

$$\ddot{L} = b * \left(\frac{2\pi}{T_E}\right)^2 \sin(\frac{2\pi}{T_E}t).$$

Berücksichtigt man die Randbedingung L(T_E) = L_E, wonach zu dem Endzeitpunkt $T_E$ die Turmauslenkung ihre Endlage L_E erreicht hat, so ergibt sich für den Parameter b, die folgende Bedingung:

$$b = \frac{L_E}{2\pi}.$$

Mit diesem Wert von b ist zudem die erste Ableitung im Anfangs- und Endpunkt gleich 0, der Turmkopf befindet sich also zu Beginn (t=0) und am Ende (t= $T_E$) in Ruhe mit einer Geschwindigkeit von Null.

Für den Kraftverlauf sind nun zwei Fälle zu unterscheiden. Der erste Fall liegt vor, wenn die Zeitdauer $T_E$ zu $\left(\frac{2\pi}{\omega_T}\right) = \frac{1}{f_T}$ gewählt wird. Mit dem Parameterwert $T_E = \left(\frac{2\pi}{\omega_T}\right) = \frac{1}{f_T}$, eingesetzt in die obere Gleichung, ergibt sich der folgende Kraftverlauf F(t):

$$F(t) = \frac{L_E}{T_E}t + \frac{2D}{\omega_T}\frac{L_E}{T_E}\left(1 - \cos(\frac{2\pi}{T_E}t)\right).$$

Diese Gleichung ist jedoch nur wahr, wenn $T_E = \left(\frac{2\pi}{\omega_T}\right) = \frac{1}{f_T}$.

Der zweite Fall liegt vor, wenn $T_E$ unabhängig von der Turmeigenfrequenz $\omega_T$ vorgegeben ist, beispielsweise durch Netzanforderungen oder andere Vorgaben. In diesem Falle gilt allgemein:

$$F(t) = \frac{L_E}{T_E}t + \frac{L_E}{2\pi}\left(\frac{1}{\omega_T^2}\frac{(2\pi)^2}{T_E^2} - 1\right) * \sin\left(\frac{2\pi}{T_E}t\right) + \frac{2D}{\omega_T}\frac{L_E}{T_E}\left(1 - \cos\left(\frac{2\pi}{T_E}t\right)\right).$$

Dieser Kraftverlauf an der Windenergieanlage führt zu der Turmauslenkung, die sich mit der Zeitfunktion L(t) beschreiben lässt.

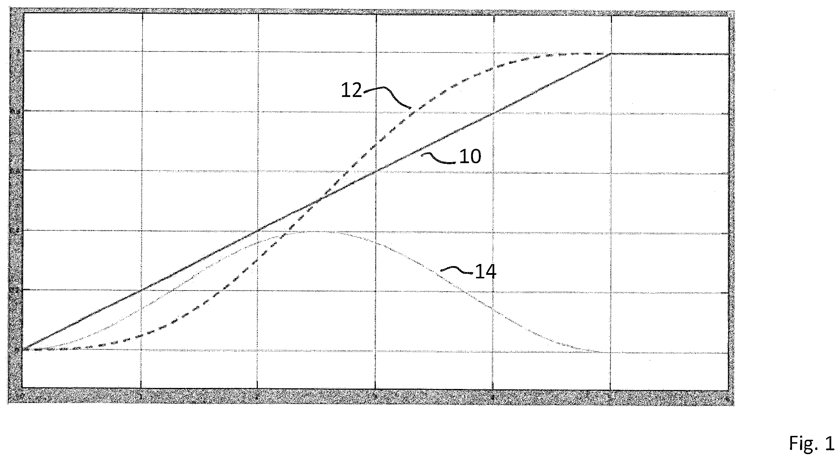

Nimmt man eine Turmdämpfung $D = 3 \times 10^{-3}$ und $T_E = 2\pi/\omega_T$ an, so kann der oszillierende Term vernachlässigt werden und es liegt eine annähernd lineare Zunahme der Rampenkraft vor. Figur 1 zeigt mit Linie 10 den Kraftverlauf über der Zeit, während die gestrichelte Linie 12 die Turmauslenkung über der Zeit zeigt. Linie 14 zeigt die Geschwindigkeit, mit der sich der Turm bewegt.

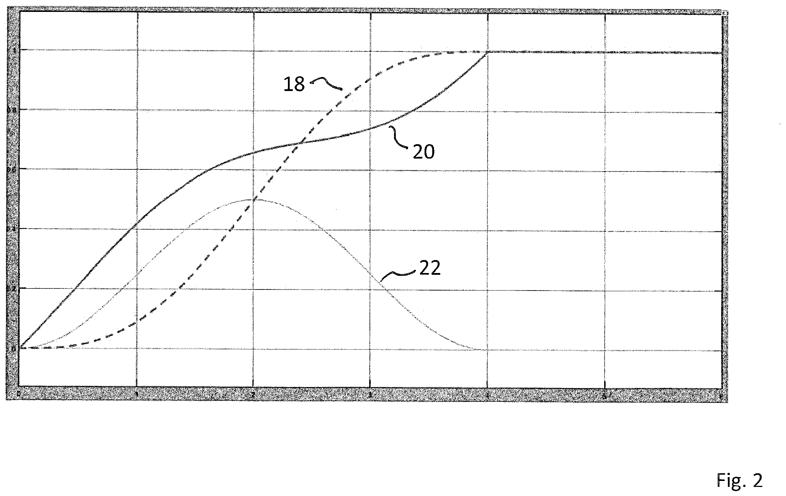

Figur 2 zeigt das Verhalten des Turms bei einer Turmdämpfung $D = 2 \times 10^{-1}$ und $T_E < 2\pi/\omega_T$. Diese deutlich stärkere Dämpfung des Turms und die kürzere Zeit $T_E$ bewirkt, dass im Term F(t) der Kosinus-Term und der Sinus-Term zum Tragen kommen, der Turm schwingt also. Figur 2 zeigt für die gestrichelt dargestellte Turmauslenkung 18, dass die an dem Turm angreifende Kraft 20 nicht linear wächst, sondern sich oszillatorisch verändert. Deutlich zu erkennen ist auch, dass hier ein anderes Geschwindigkeitsprofil 22 vorliegt. Zu beachten ist, dass in Figur 2 der angegebene Endzeitpunkt früher erreicht werden soll als in Figur 1, also die Periodendauer $T_E$ kürzer gewählt ist.

Der Zusammenhang zwischen dem Blatteinstellwinkel als dem Betriebsparameter und der Schubkraft des Rotors auf den Turm $F_s$ der Windenergieanlage ist durch folgende Gleichung gegeben:

$$F_s = ct(pitch, TSR) * 0,5 * A * rho * v^2,$$

wobei A die Rotorfläche, v die Windgeschwindigkeit, pitch den Blatteinstellwinkel, TSR die Schnelllaufzahl und rho die Dichte beschreibt. ct bezeichnet hierbei den Schubbeiwert der sich als Funktion aus dem Blatteinstellwinkel pitch und der Schnelllaufzahl TSR ergibt.

Aus der obigen Gleichung kann nun der Zusammenhang zwischen Änderung des Betriebsparameters, wie beispielsweise dem Blatteinstellwinkel pitch, und der Schubkraft des Rotors auf den Turm $F_s$, bestimmt werden. Selbstverständlich kann dieser Zusammenhang auch in entgegengesetzter Richtung genutzt werden, wenn beispielsweise ein bevorzugter zeitbezogener Kraftverlauf für den Turm vorliegt. So kann hieraus zurückgerechnet werden, bei welcher Schnelllaufzahl TSR welcher Blatteinstellwinkel pitch an der Windenergieanlage vorzugeben ist, um den gewünschten zeitbezogenen Kraftverlauf zu erzielen.

Bezugszeichenliste

10   Kraftverlauf linear
12   Turmauslenkung
14   Geschwindigkeit
18   Turmauslenkung
20   Kraftverlauf
22   Geschwindigkeit

**Patentansprüche**

1. Verfahren zur Steuerung einer Windenergieanlage, die einen Turm und einen mit mindestens einem in seinem Blatteinstellwinkel verstellbaren Rotorblatt ausgestatteten Rotor aufweist, bei einer Änderung eines Leistungssollwerts, wobei die Änderung des Leistungssollwerts in einem vorbestimmten Zeitintervall ($T_E$) und durch das Ansteuern eines oder mehrerer eine von der Windenergieanlage einzuspeisende Leistung bestimmender Betriebsparameter erfolgt, **gekennzeichnet durch** folgende Verfahrensschritte:

   - Eine parametrierte Zeitfunktion der Turmauslenkung (12, 18) wird für das vorbestimmte Zeitintervall ($T_E$) festgelegt, wobei für die parametrierte Zeitfunktion der Turmauslenkung (12, 18) eine Reihe von Randbedingungen festgelegt sind,
   - eine Schubkraft des Rotors (10, 20) auf den Turm der Windenergieanlage wird für die parametrierte Zeitfunktion der Turmauslenkung (12, 18) ermittelt und
   - eine Funktion zur Ansteuerung des Betriebsparameters oder der Betriebsparameter wird aus der Schubkraft des Rotors (10, 20) berechnet.

2. Verfahren nach Anspruch 1, **dadurch gekennzeichnet, dass** die Änderung des Blatteinstellwinkels des mindestens einen Rotorblattes die Funktion zur Ansteuerung des Betriebsparameters bildet.

3. Verfahren nach Anspruch 1 oder 2, **dadurch gekennzeichnet, dass** die parametrierte Zeitfunktion der Turmauslenkung (12, 18) eine oder mehrere turmspezifische Konstanten ($\omega_T$) aufweist.

4. Verfahren nach einem der Ansprüche 1 bis 3, **dadurch gekennzeichnet, dass** die parametrierte Zeitfunktion der Turmauslenkung (12, 18) Randbedingungen einhält, wonach bei Erreichen des neuen Leistungssollwerts die erste und zweite Ableitung der parametrierten Zeitfunktion der Turmauslenkung (12, 18) verschwinden.

5. Verfahren nach Anspruch 4, **dadurch gekennzeichnet, dass** die parametrierte Zeitfunktion der Turmauslenkung (12, 18) einen linear steigenden Anteil und einen oszillatorischen Anteil aufweist.

6. Verfahren nach einem der Ansprüche 1 bis 5, **dadurch gekennzeichnet, dass** die parametrierte Zeitfunktion der Turmauslenkung (12, 18) eine maximale Turmauslenkung aufweist, die nicht über die Turmauslenkung in die Endlage hinausgeht.

7. Verfahren nach einem der Ansprüche 1 bis 6, **dadurch gekennzeichnet, dass** die parametrierte Zeitfunktion der Turmauslenkung (12, 18) eine maximale Änderung des Leistungssollwerts in einem vorbestimmten Zeitintervall nicht übersteigt.

**Claims**

1. A method for controlling a wind turbine, which has a tower and a rotor equipped with at least one rotor blade with an adjustable blade pitch angle, during a change of a power target value, wherein the change of the power target value takes place in a predetermined time interval ($T_E$) and by controlling one or more operating parameters determining a power output to be fed in by the wind turbine, **characterized by** the following method steps:

- a parameterized time function of the tower deflection (12, 18) is established for the predetermined time interval ($T_E$), wherein a series of boundary conditions are established for the parameterized time function of the tower deflection (12, 18),
- a thrust of the rotor (10, 20) on the tower of the wind turbine is ascertained for the parameterized time function of the tower deflection (12, 18), and
- a function for controlling the operating parameter or the operating parameters is calculated from the thrust of the rotor (10, 20).

2. The method according to claim 1, **characterized in that** the change of the blade pitch angle of the at least one rotor blade forms the function for controlling the operating parameter.

3. The method according to claim 1 or 2, **characterized in that** the parameterized time function of the tower deflection (12, 18) has one or more tower-specific constants ($\omega_T$).

4. The method according to one of claims 1 to 3, **characterized in that** the parameterized time function of the tower deflection (12, 18) meets boundary conditions, according to which, when the new power target value is reached, the first and second derivation of the parameterized time function of the tower deflection (12, 18) disappear.

5. The method according to claim 4, **characterized in that** the parameterized time function of the tower deflection (12, 18) has a linearly increasing portion and an oscillating portion.

6. The method according to one of claims 1 to 5, **characterized in that** the parameterized time function of the tower deflection (12, 18) has a maximum tower deflection that does not go past the tower deflection in the end position.

7. The method according to one of claims 1 to 6, **characterized in that** the parameterized time function of the tower deflection (12, 18) does not exceed a maximum change of the power target value in a predetermined time interval.

## Revendications

1. Procédé de commande d'une éolienne, laquelle présente une tour et un rotor doté d'au moins une pale de rotor déplaçable dans son angle de réglage de pale, lors d'un changement de la valeur de consigne de puissance, dans lequel le changement de la valeur de consigne de puissance s'effectue dans un intervalle temporel prédéfini ($T_E$) et par l'activation d'un ou de plusieurs paramètres de fonctionnement déterminant une puissance à fournir par l'éolienne, **caractérisé par** les étapes de procédé suivantes :

une fonction temporelle paramétrée de la déviation de tour (12, 18) est fixée pour l'intervalle temporel prédéfini ($T_E$), une série de conditions limites étant fixée pour la fonction temporelle de la déviation de tour (12, 18),
une force de poussée du rotor (10, 20) sur la tour de l'éolienne est déterminée pour la fonction temporelle paramétrée de la déviation de tour (12, 18) et
une fonction pour l'activation du paramètre de fonctionnement ou des paramètres de fonctionnement est calculée à partir de la force de poussée du rotor (10, 20).

2. Procédé selon la revendication 1, **caractérisé en ce que** le changement de l'angle de réglage de pale de l'au moins une pale de rotor forme la fonction pour l'activation du paramètre de fonctionnement.

3. Procédé selon la revendication 1 ou 2, **caractérisé en ce que** la fonction temporelle paramétrée de la déviation de tour (12, 18) présente une ou plusieurs constantes spécifiques à la tour ($\omega_T$).

4. Procédé selon l'une des revendications 1 à 3, **caractérisé en ce que** la fonction temporelle paramétrée de la déviation de tour (12, 18) respecte des conditions limites, moyennant quoi, lors de l'atteinte de la nouvelle valeur de consigne de puissance, la première et la deuxième dérivée de la fonction temporelle paramétrée de la déviation de tour (12, 18) disparaissent.

5. Procédé selon la revendication 4, **caractérisé en ce que** la fonction temporelle paramétrée de la déviation de tour (12, 18) présente une part augmentant linéairement et une part oscillatoire.

6. Procédé selon l'une des revendications 1 à 5, **caractérisé en ce que** la fonction temporelle paramétrée de la déviation de tour (12, 18) présente une déviation de tour maximale n'allant pas au-delà de la déviation de tour vers la position finale.

7. Procédé selon l'une des revendications 1 à 6, **caractérisé en ce que** la fonction temporelle paramétrée de la déviation de tour (12, 18) ne dépassant pas un changement maximal de la valeur de consigne de puissance dans un intervalle temporel prédéfini.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016198077 A1
- WO 2017190744 A1
- EP 3165765 A1
- WO 2015078478 A1
- WO 2016138906 A1
- WO 2016198076 A1
- EP 2224129 B1
- EP 3156646 B1
- DE 102016212362 A1